# EUROPEAN PATENT SPECIFICATION

(11) **EP 1 199 499 B1**
(45) Date of publication and mention of the grant of the patent: **22.12.2004**
(21) Application number: 00250345.6
(22) Date of filing: 19.10.2000
(51) Int. Cl.: F16H 61/06

(54) **Hydraulic pressure control method and apparatus for an automatic transmission**
Methode und Steuereinrichtung zur Regelung des hydraulischen Druckes für ein automatisches Getriebe
Méthode et dispositif de commande de la pression hydraulique pour une transmission automatique

(43) Date of publication of application: 24.04.2002
(73) Proprietor: NISSAN MOTOR COMPANY, LIMITED, Yokohama-shi, Kanagawa 221-0023 (JP)
(72) Inventor: Ishii, Shigeru, Atsugi City, Kanagawa (JP); Sugiuchi, Masashi, Hiratsuka City, Kanagawa (JP)
(74) Representative: Godwin, Edgar James

(56) References cited:
- DE-A- 19 937 053
- US-A- 4 956 776
- US-A- 4 967 385

## Description

The present invention relates to a hydraulic pressure control method and apparatus, for an automatic transmission for a vehicle, in which a signal pressure is produced by an electrical signal, and an output pressure is controlled by this signal pressure.

An automatic transmission for a vehicle performs speed changing by selectively engaging a plurality of frictional elements, such as clutches and brakes. If at this time the engagement pressure for a frictional element is not appropriate, there is a possibility that speed change shock may occur or that the speed changing response may be slow.

In this connection, it is proposed in Japanese Patent Laying-Open Publication Heisei 8-270777 to perform transition control for the line pressure which engages the frictional elements.

A hydraulic pressure control circuit for an automatic transmission produces a signal pressure by driving a solenoid, and controls by this signal pressure an engagement pressure for a frictional element which is an output pressure, or a line pressure which controls engagement of a frictional element, so as to perform speed changing. However, there is the problem that the relationship between the drive electrical signal for the solenoid and the output pressure cannot be accurately determined, due to variation or individual differences in circuit resistance.

In order to solve this problem, it has been conceived to store a complete set of data relating to actually measured output pressure for each level of electrical signal within the control device, to derive from this database the value of electrical signal which corresponds to the required value for the output pressure, and to send an electrical signal of this value as a command to the solenoid. In this case, an expanded memory capacity becomes necessary for storing the above database, and the cost is increased.

US-A-4 956 776 discloses a hydraulic pressure control method and an automatic transmission in accordance with the preambles of claims 1 and 5 respectively.

The present invention provides a hydraulic pressure control method as set forth in claim 1 and an automatic transmission as set forth in claim 5.

### Brief Description of the Drawings

Fig. 1 is a general view of an automatic transmission for a vehicle.
Fig. 2 is a system diagram showing hydraulic pressure control apparatus of an automatic transmission to which the hydraulic pressure control method according to the present invention is applied.
Fig. 3 is a flow chart showing a procedure which determines a relationship between solenoid pressure and clutch engagement pressure, according to the preferred embodiment of the present invention.
Fig. 4 is a set of characteristic graphs used in the process whose flow chart is shown in Fig. 3, of which (a) shows actually measured data values for output pressure, (b) is a main map for a signal pressure, and (c) shows the relationship between signal pressure and output pressure.

### Description of the Preferred Embodiment

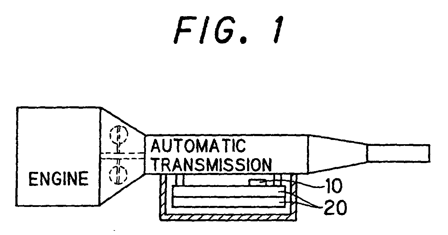

Referring to Fig. 1, a control device 10 which functions as hydraulic pressure control apparatus controls a control valve 20, and supplies operating hydraulic fluid at a predetermined pressure level to an automatic transmission which is connected to an engine.

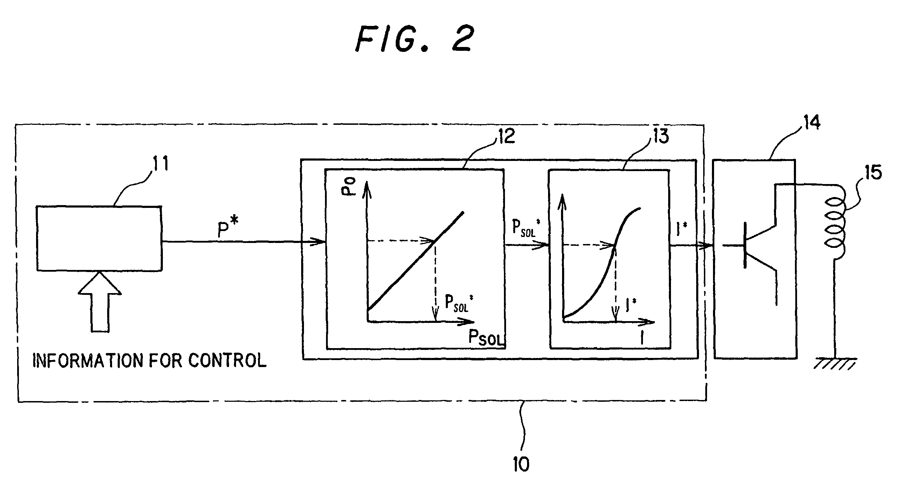

Referring to Fig. 2, the control device 10 (which employs a hydraulic pressure control method in accordance with the present invention) comprises a clutch engagement pressure required value calculation section 11, a solenoid pressure calculation section 12, a solenoid drive current calculation section 13, a solenoid drive circuit 14, and a solenoid 15.

The clutch engagement pressure required value calculation section 11 inputs various items of information for hydraulic pressure control. Based upon this information, the clutch engagement pressure required value calculation section 11 calculates a required value P* for the clutch engagement pressure as an output pressure which corresponds to the transmission input torque etc.

Based upon a relationship (which is derived as will be described in detail hereinafter) between a clutch engagement pressure Po and a solenoid pressure P_{SOL} which serves as a signal pressure, the solenoid pressure calculation section 12 derives a required solenoid pressure value P_{SOL}* which corresponds to the clutch engagement pressure required value P*.

The solenoid drive current calculation section 13 derives a required solenoid drive current I* (an electrical signal) from this required solenoid pressure P_{SOL}*, based upon a main map, derived and stored in advance, which specifies the relationship between solenoid drive current I and solenoid pressure P_{SOL}.

The clutch engagement pressure required value calculation section 11, the solenoid pressure calculation section 12, and the solenoid drive current calculation section 13 constitute the control device 10, which is fitted as an integral unit to the main body of the automatic transmission.

The required solenoid drive current I* is supplied via the solenoid drive circuit 14 to the solenoid 15, which is a signal pressure generation element. This solenoid 15 controls the opening amount of a control valve 20, and thereby produces the required solenoid pressure P_{SOL}* according to the required solenoid drive current I*.

Further, the hydraulic pressure control apparatus controls the clutch engagement pressure Po by the required solenoid pressure P_{SOL}* so as to bring it to be equal to the clutch engagement pressure required value P*.

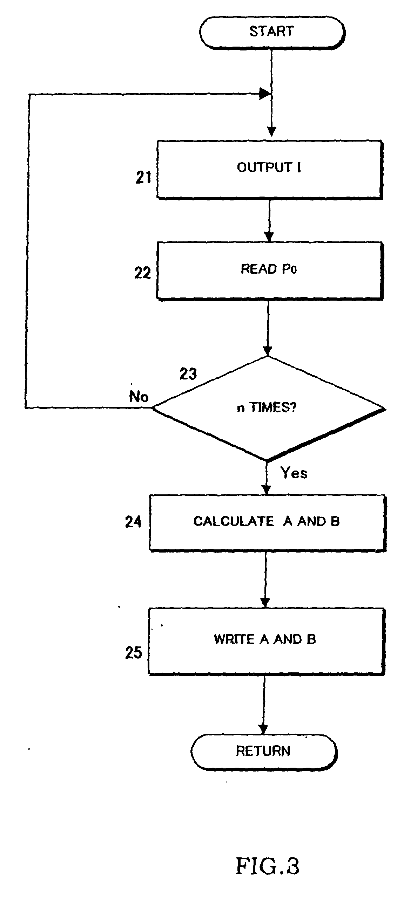

The relationship between the clutch engagement pressure Po and the solenoid pressure P_{SOL} in the solenoid pressure calculation section 12 is determined during the manufacture of the hydraulic pressure control apparatus by the flow chart shown in Fig. 3, and is stored within the control device 10.

The details of the control by the solenoid pressure calculation section 12 will now be explained with reference to Fig. 3.

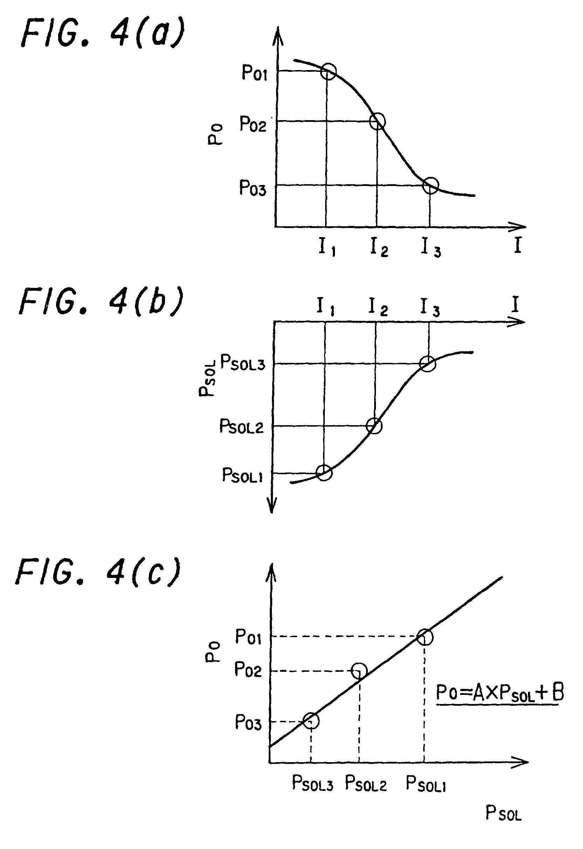

This control starts upon the completion of preparations for measurement of the clutch engagement pressure Po, and first in steps 21 and 22 the solenoid drive current I is repeatedly output at each solenoid drive current I which is varied solenoid drive current I, and for each current value the clutch engagement pressure Po is actually measured as shown in Fig. 4(a).

In step 23 a decision is made as to whether or not this actual measurement has been performed a predetermined number of times n. For example, in the case of the preferred embodiment, n=3.

In step 24, the table map for the solenoid which most closely resembles the actually measured data of Fig. 4(a) is selected as the main map. For example, a solenoid table map which embodies a relationship between the solenoid drive current I and the solenoid pressure P_{SOL} like that shown in Fig. 4(b) is selected as the main map. It should be understood that the drive characteristic of the solenoid is measured in advance during manufacture and stored. A relationship like Fig. 4(c) between the solenoid pressure P_{SOL} and the clutch engagement pressure Po is approximately calculated from these actually measured data of Fig. 4(a) and the main map of Fig. 4(b) as a linear function like Po = A x P_{SOL} + B by, for example, the method of least squares. The coefficient A and the constant B in this approximate linear relationship respectively constitute a coefficient for compensation A and an offset B.

In step 25, during manufacture of the hydraulic pressure control apparatus, the coefficient for compensation A and the offset B are stored in the control device 10 as a relationship between the clutch engagement pressure Po and the solenoid pressure P_{SOL} for the solenoid pressure calculation section 12. This coefficient for compensation A and this offset B are used during the calculation of the required solenoid pressure P_{SOL}* by the solenoid pressure calculation section 12.

In this manner, first, the required solenoid pressure P_{SOL}* which corresponds to the clutch engagement pressure required value P* is derived by the solenoid pressure calculation section 12 using the coefficient for compensation A and the offset B, in other words using the relationship shown in Fig. 4(c) between the clutch engagement pressure Po and the solenoid pressure P_{SOL}. Next, the case will be considered of deriving the required solenoid drive current I* for generating the required solenoid pressure P_{SOL}* by the solenoid drive current calculation section 13, based upon the main map which gives the relationship between the solenoid drive current I and the solenoid pressure PsoL shown in Fig. 4(b). In this case, it is possible accurately to control the output pressure Po to the output pressure required value P*, since the relationship shown in Fig. 4(c) between the clutch engagement pressure Po and the solenoid pressure P_{SOL} compensates for deviation of the relationship between the drive current I for the solenoid 15 and the output pressure Po caused by variation or individual differences in circuit resistance.

Moreover, no expanded memory capacity is required, since it is only the relationship between the solenoid pressure P_{SOL} and the clutch engagement pressure Po which is stored in the control device 10, so that it is possible to implement the above-described compensation cheaply with a memory of small capacity.

Further, with this embodiment, it becomes possible further to reduce the memory capacity, since the relationship between the solenoid pressure P_{SOL} and the clutch engagement pressure Po is obtained according to the least squares method, and the compensation coefficient A and the compensation offset B between them are stored in the control device 10.

Since the control device is fixed to the automatic transmission and they are formed into one unit, it is possible to record the relationship between the signal pressure and the output pressure in the control device in their original state as separate units before mounting the automatic transmission to the vehicle, and thus by the above-described approximate calculation it becomes possible to simplify the automatic transmission yet further.

## Claims

1. A hydraulic pressure control method for an automatic transmission comprising a friction engaging element and a signal pressure generation element (15) which generates a signal pressure (P_{SOL}) for controlling an output pressure (Po) which is to be supplied to the friction engaging element according to an input electrical signal (I) and a main map which specifies a relationship between a signal pressure (P_{SOL}) for generating an output pressure (Po) corresponding to a required output value (P*) and the electrical signal (I) at this time, wherein:
various output pressures (Po) which are actually generated when various electrical signals (I) based upon various signal pressures (P_{SOL}) are input to the signal pressure generation element (15) are measured in advance, and the relationship between these measured values (Po) and the signal pressures (P_{SOL}) at that time is stored in a control device;
the relationship with the signal pressure (P_{SOL}) corresponding to the required output value (P*) is compensated based upon the stored relationship between these measured values (Po) and signal pressures (P_{SOL}); and
when the required output value (P*) is input, the electrical signal (I) is obtained from the said main map based upon the compensated value (P_{SOL}*) for signal pressure, and this is input to the signal pressure generation element (15);
**characterised in that** the compensation of the signal pressure (P_{SOL}) based upon the required output value (P*) is approximately calculated as a linear function, and the coefficient and the constant of the approximated linear function are stored in the control device.

2. A hydraulic pressure control method claim 1, wherein the signal pressure generation element is a solenoid (15) which regulates a hydraulic pressure of the automatic transmission, and the said output pressure (Po) is an engagement pressure of a frictional element.

3. A hydraulic pressure control method as claimed in claim 1 or 2, wherein a least squares method is used for the said approximate calculation.

4. A hydraulic pressure control method as claimed in any preceding claim, wherein the control device is fitted into the main body of the automatic transmission as an integral unit.

5. An automatic transmission including:
a solenoid (15) which generates a signal pressure (P_{SOL}) for controlling an output pressure (Po) which is to be supplied to a friction engaging element of the automatic transmission, according to an input electrical signal (I); and
a control device which controls the electrical signal to the solenoid (15);
wherein the control device executes a program in the following manner:
it stores a signal pressure (P_{SOL}) for generating an output pressure (Po) corresponding to a required output value (P*), and a main map which specifies a relationship with the electrical signal (I) at that time;
various output pressures (Po) which are actually generated when various electrical signals (I) based upon various signal pressures (P_{SOL}) are input to the solenoid (15) are measured in advance, and it stores the relationship between these measured values (Po) and the signal pressures (P_{SOL}) at this time;
it compensates the relationship with the signal pressure (P_{SOL}) corresponding to the required output value (P*) based upon the stored relationship between these measured values (Po) and the signal pressures (P_{SOL}); and
when the required output value (P*) is input, it obtains the electrical signal
(I) from the said main map based upon the compensated value (P_{SOL}*) for the signal pressure, and inputs this to the solenoid;
**characterised in that** the compensation of the signal pressure (P_{SOL}) based upon the required output value (P*) is approximately calculated as a linear function, and the coefficient and the constant of the approximated linear function are stored in the control device.

## Patentansprüche

1. Hydraulikdruck-Steuerverfahren für ein Automatikgetriebe, umfassend ein Reibungseingriffselement und ein Signaldruck-Erzeugungselement (15), das erzeugt einen Signaldruck (P_{SOL}) zum Steuern eines Ausgangsdrucks (Po), der an das Reibungseingriffselement geliefert werden soll in Übereinstimmung mit einem eingegebenen elektrischen Signal (I) und einer Hauptkarte, die eine Beziehung zwischen einem Signaldruck (P_{SOL}) zum Erzeugen eines Ausgangsdrucks (Po) entsprechend zu einem benötigten Ausgangswert (P*) und dem elektrischen Signal (I) zu dieser Zeit spezifiziert, wobei:
verschiedene Ausgangsdrucke (Po), die tatsächlich erzeugt werden, wenn verschiedene elektrische Signale (I) basierend auf verschiedenen Signaldrucken (P_{SOL}) dem Signaldruck-Erzeugungselement (15) eingegeben werden, vorher gemessen werden und die Beziehung zwischen diesen gemessenen Werten (Po) und den Signaldrucken (P_{SOL}) zu dieser Zeit in einer Speichereinrichtung gespeichert wird;
die Beziehung mit dem Signaldruck (P_{SOL}) entsprechend zu dem erforderlichen Ausgangswert (P*) auf Grundlage der gespeicherten Beziehung zwischen diesen gemessenen Werten (Po) und Signaldrucken (P_{SOL}) kompensiert wird; und
wenn der erforderliche Ausgangswert (P*) eingegeben wird, das elektrische Signal (I) aus der besagten Hauptkarte auf Grundlage des kompensierten Werts (P_{SOL}*) für den Signaldruck ermittelt wird und dieses dem Signaldruck-Erzeugungselement (15) eingegeben wird;
**dadurch gekennzeichnet, dass**
die Kompensation des Signaldrucks (P_{SOL}) auf Grundlage des erforderlichen Ausgangswerts (P*) als eine lineare Funktion approximiert berechnet wird und der Koeffizient und die Konstante der approximierten linearen Funktion in der Steuereinrichtung gespeichert werden.

2. Hydraulikdruck-Steuerverfahren nach Anspruch 1, wobei das Signaldruck-Erzeugungselement ein Solenoid (15) ist, welches einen Hydraulikdruck des Automatikgetriebes regelt, und der besagte Ausgangsdruck (P₀) ein Eingriffsdruck eines Reibungselements ist.

3. Hydraulikdruck-Steuerverfahren nach Anspruch 1 oder 2, wobei ein Verfahren der kleinsten Fehlerquadrate für die besagte ungefähre Berechnung verwendet wird.

4. Hydraulikdruck-Steuerverfahren nach irgendeinem vorangehenden Anspruch, wobei die Steuereinrichtung in den Hauptkörper des Automatikgetriebes als eine integrale Einheit eingebaut ist.

5. Automatikgetriebe, einschließend:
ein Solenoid (15), das einen Signaldruck (P_{SOL}) zum Steuern eines Ausgangsdrucks (Po) erzeugt, der an ein Reibungseingriffselement des Automatikgetriebes geliefert werden soll, in Übereinstimmung mit einem eingegebenen elektrischen Signal (I); und
eine Steuereinrichtung, die das elektrische Signal zu dem Solenoid (15) steuert;
wobei die Steuereinrichtung ein Programm in der folgenden Weise ausführt:
es speichert einen Signaldruck (P_{SOL}) zum Erzeugen eines Ausgangsdrucks (Po) entsprechend zu einem erforderlichen Ausgangswert (P*), und einer Hauptkarte, die eine Beziehung mit dem elektrischen Signal (I) zu dieser Zeit spezifiziert;
verschiedene Ausgangsdrucke (Po), die tatsächlich erzeugt werden, wenn verschiedene elektrische Signale (I), die auf verschiedenen Signaldrucken (P_{SOL}) basieren, dem Solenoid (15) eingegeben werden, vorher gemessen werden, und es die Beziehung zwischen diesen gemessenen Werten (Po) und den Signaldrucken (P_{SOL}) zu dieser Zeit speichert;
es die Beziehung mit dem Signaldruck (P_{SOL}) entsprechend zu dem erforderlichen Ausgangsdruck (P*) auf Grundlage der gespeicherten Beziehung zwischen diesen gemessenen Werten (Po) und den Signaldrucken (P_{SOL}) kompensiert; und
wenn der erforderliche Ausgangswert (P*) eingegeben wird, es das elektrische Signal (I) aus der Hauptkarte auf Grundlage des kompensierten Werts (P_{SOL}*) für den Signaldruck ermittelt und dieses dem Solenoid eingibt;
**dadurch gekennzeichnet, dass** die Kompensation des Signaldrucks (P_{SOL}) auf Grundlage des erforderlichen Ausgangswerts (P*) als eine lineare Funktion approximiert berechnet wird, und der Koeffizient und die Konstante der approximierten linearen Funktion in der Steuereinrichtung gespeichert werden.

## Revendications

1. Procédé de commande de pression hydraulique pour une transmission automatique comprenant un élément de coopération par friction et un élément de génération de pression de signal (15) qui génère une pression de signal (P_{SOL}) pour commander une pression de sortie (Po) qui peut être appliquée sur l'élément de coopération par friction en conformité avec un signal électrique d'entrée (I) et une carte principale qui spécifie une relation entre une pression de signal (P_{SOL}) pour générer une pression de sortie (Po) en correspondance avec une valeur de sortie requise (P*) et le signal électrique (I) à cet instant, dans lequel:
diverses pressions de sortie (Po) qui sont réellement générées lorsque divers signaux électriques (I) qui sont basés sur diverses pressions de signal (P_{SOL}) sont entrés sur l'élément de génération de pression de signal (15) sont mesurées à l'avance et la relation entre ces valeurs mesurées (Po) et la pression de signal (P_{SOL}) à cet instant est stockée dans un dispositif de commande;
la relation avec la pression de signal (P_{SOL}) correspondant à la valeur de sortie requise (P*) est compensée sur la base de la relation stockée entre ces valeurs mesurées (Po) et ces pressions de signal (P_{SOL}); et
lorsque la valeur de sortie requise (P*) est entrée, le signal électrique (I) est obtenu à partir de ladite carte principale sur la base de la valeur compensée (P_{SOL}*) pour la pression de signal et ce signal est entré sur l'élément de génération de pression de signal (15),
**caractérisé en ce que** la compensation de la pression de signal (P_{SOL}) sur la base de la valeur de sortie requise (P*) est calculée de manière approchée en tant que fonction linéaire et le coefficient et la constante de la fonction linéaire approchée sont stockés dans le dispositif de commande.

2. Procédé de commande de pression hydraulique selon la revendication 1, dans lequel l'élément de génération de pression de signal est un solénoïde(15) qui régule une pression hydraulique de la transmission automatique et ladite pression de sortie (Po) est une pression de coopération d'un élément de friction.

3. Procédé de commande de pression hydraulique selon la revendication 1 ou 2, dans lequel un procédé par les moindres carrés est utilisé pour ledit calcul approché.

4. Procédé de commande de pression hydraulique selon l'une quelconque des revendications précédentes, dans lequel le dispositif de commande est ajusté dans le corps principal de la transmission automatique en tant qu'unité intégrale.

5. Transmission automatique incluant:
un solénoïde(15) qui génère une pression de signal (P_{SOL}) pour commander une pression de sortie (Po) qui doit être appliquée sur un élément de coopération par friction de la transmission automatique, conformément à un signal électrique d'entrée (I); et
un dispositif de commande qui commande le signal électrique sur le solénoïde (15),
dans laquelle le dispositif de commande exécute un programme selon la façon qui suit:
il stocke une pression de signal (P_{SOL}) pour générer une pression de sortie (Po) en correspondance avec une valeur de sortie requise (P*) et une carte principale qui spécifie une relation avec le signal électrique (I) à cet instant;
diverses pressions de sortie (Po) qui sont générées réellement lorsque divers signaux électriques (I) qui sont basés sur diverses pressions de signal (P_{SOL}) sont entrés sur le solénoïde(15) sont mesurées à l'avance et il stocke la relation entre ces valeurs mesurées (Po) et les pressions de signal (P_{SOL}) à cet instant;
il compense la relation avec la pression de signal (P_{SOL}) qui correspond à la valeur de sortie requise (P*) sur la base de la relation stockée entre ces valeurs mesurées (Po) et les pressions de signal (P_{SOL}); et
lorsque la valeur de sortie requise (P*) est entrée, il obtient le signal électrique (I) à partir de ladite carte principale sur la base de la valeur compensée (P_{SOL}*) pour la pression de signal et il entre cette information sur l'électro-aimant,
**caractérisée en ce que** la compensation de la pression de signal (P_{SOL}) sur la base de la valeur de sortie requise (P*) est calculée de manière approchée en tant que fonction linéaire et le coefficient et la constante de la fonction linéaire approchée sont stockés dans le dispositif de commande.
